# EUROPEAN PATENT APPLICATION

(11) **EP 4 851 484 A1**
(43) Date of publication of application: **09.12.2026**
(21) Application number: 24921392.7
(22) Date of filing: 28.08.2024
(51) Int. Cl.: F16F 15/08, F16F 15/04, F04B 39/00, B60H 1/32

(54) **SHOCK ABSORPTION ASSEMBLY, SHOCK ABSORPTION BRACKET, AIR COMPRESSOR ASSEMBLY AND VEHICLE**

(30) Priority: 31.01.2024 CN 202420249276 U; 31.01.2024 CN 202420241872 U
(71) Applicant: BYD Company Limited, Shenzhen, Guangdong 518118 (CN)
(72) Inventor: PENG, Chaoxiong, Shenzhen, Guangdong 518118 (CN); XU, Kang, Shenzhen, Guangdong 518118 (CN); DENG, Xiuhong, Shenzhen, Guangdong 518118 (CN); OU YANG, Tao, Shenzhen, Guangdong 518118 (CN)
(74) Representative: Mathys & Squire
(86) International application number: PCT/CN2024/115050
(87) International publication number: WO 2025/161366

(57) **Abstract**

A shock absorption assembly, a shock absorption bracket 100, an air compressor assembly and a vehicle 500. The shock absorption assembly comprises second shock absorption members 300, wherein each second shock absorption member 300 comprises a second buffer seat 320, the second buffer seat 320 being provided with a second connecting hole A 321 in an axial direction, and a second connecting groove 322 being formed on the outer peripheral side of the second buffer seat 320. The shock absorption assembly can provide axial and radial buffering by means of the provision of the buffer seats, and the connecting grooves, serving as parts connected to an external structure, have sufficient contact area and stability in the axial direction.

## Description

### CROSS-REFERENCE TO RELATED DISCLOSURES

The present disclosure claims priority to two Chinese patent applications filed with the China National Intellectual Property Administration on January 31, 2024: Application No. 202420249276.2, entitled "SHOCK ABSORPTION BRACKET, AIR COMPRESSOR ASSEMBLY AND VEHICLE"; and Application No. 202420241872.6, entitled "SHOCK ABSORPTION ASSEMBLY, SHOCK ABSORPTION BRACKET, AIR COMPRESSOR ASSEMBLY AND VEHICLE", which are incorporated herein by reference in their entirety.

### FIELD

The present disclosure relates to, but is not limited to, the field of automotive technology, and in particular, to a shock absorption assembly, a shock absorption bracket, an air compressor assembly, and a vehicle.

### BACKGROUND

At present, air compressors are usually required to be mounted to vehicles through shock absorption brackets, so as to reduce the possibility of vibration being transmitted to the vehicle frame. The shock absorption bracket may also be arranged with a bent portion to adapt to different mounting surfaces, but an integrated shock absorption bracket has poor adaptability, cannot meet the requirements of various mounting scenarios, and has certain limitations during installation and use.

### SUMMARY

The shock absorption bracket has poor adaptability and cannot meet the requirements of various mounting scenarios, and has certain limitations during installation and use.

In a first aspect, the present disclosure provides a shock absorption assembly, including:
a second shock absorption member, the second shock absorption member including:
a second buffer seat, the second buffer seat being arranged with a second connecting hole A in the axial direction, and a second connecting groove being formed on an outer peripheral side of the second buffer seat.

In a second aspect, the present disclosure provides a shock absorption bracket, including:
a main bracket portion, the main bracket portion being configured to be connected to an external structure;
an auxiliary bracket portion, the auxiliary bracket portion being connected to the main bracket portion, and the auxiliary bracket portion being configured to be connected to an external structure; and
the shock absorption assembly described above, wherein the main bracket portion and the auxiliary bracket portion are connected by the second shock absorption member.

In a third aspect, the present disclosure provides a shock absorption bracket, including a bracket body and the shock absorption assembly described above, wherein a first shock absorption member is configured to be connected to an air compressor, and the second shock absorption member is configured to be connected to a vehicle body.

In a fourth aspect, the present disclosure provides an air compressor assembly, including an air compressor and the shock absorption bracket described above.

In a fifth aspect, the present disclosure provides an air compressor assembly including an air compressor and the shock absorption bracket described above, wherein the air compressor is mounted to the shock absorption bracket through the first shock absorption member.

In a sixth aspect, the present disclosure provides a vehicle including the air compressor assembly described above.

According to the shock absorption assembly provided by the first aspect of the present disclosure, the shock absorption assembly can provide axial and radial buffering by means of the provision of the buffer seats, and the connecting grooves, serving as parts connected to an external structure, have sufficient contact area and stability in the axial direction at the connection. The two shock absorption members can meet different requirements, and the combination of the two shock absorption members provides flexible and diversified shock absorption effects.

According to the shock absorption bracket provided by the second aspect of the present disclosure, the main bracket portion and the auxiliary bracket portion are arranged separately, which provides high flexibility, can better adapt to the requirements of different mounting surfaces, and results in low costs. Meanwhile, a second shock absorption member is arranged between the main bracket portion and the auxiliary bracket portion, so that the connection portion between the main bracket portion and the auxiliary bracket portion has good buffering performance, and the overall structure has high stability, and the service life is long.

According to the shock absorption bracket provided by the third aspect of the present disclosure, a first shock absorption member is arranged between the bracket body and the air compressor to achieve primary shock absorption; and the second shock absorption member is arranged between the bracket body and the vehicle body to achieve secondary shock absorption.

According to the air compressor assembly provided by the fourth aspect or the fifth aspect of the present disclosure, the provision of the shock absorption bracket achieves vibration isolation of the air compressor, thereby reducing mechanical stress caused by vibration, which extends the service life of the air compressor and its components, and reduces maintenance costs and downtime.

According to the vehicle provided by the sixth aspect of the present disclosure, the vibration isolation design of the air compressor assembly can effectively reduce the impact of vibration on the overall vehicle structure, and improve the stability and ride comfort of the vehicle.

### BRIEF DESCRIPTION OF THE DRAWINGS

The following drawings of embodiments of the present disclosure are hereby incorporated as part of the present disclosure for understanding the present disclosure. The drawings illustrate embodiments of the present disclosure and the description thereof, and serve to explain the principles of the present disclosure. In the drawings:
FIG. 1 is a schematic perspective view of a shock absorption bracket provided by the present disclosure;
FIG. 2 is a schematic perspective view of the shock absorption bracket from another angle;
FIG. 3 is an enlarged schematic view of Part C in FIG. 1;
FIG. 4 is a cross-sectional view of Part D in FIG. 3;
FIG. 5 is a cross-sectional view of a first shock absorption member;
FIG. 6 is a schematic perspective view of the first shock absorption member;
FIG. 7 is an enlarged schematic view of Part A in FIG. 1;
FIG. 8 is a cross-sectional view of Part E in FIG. 7;
FIG. 9 is an enlarged schematic view of Part B in FIG. 1;
FIG. 10 is a cross-sectional view of Part F in FIG. 9;
FIG. 11 is a cross-sectional view of a second shock absorption member;
FIG. 12 is a schematic perspective view of the second shock absorption member;
FIG. 13 is a schematic perspective view of one form of the shock absorption bracket provided by an embodiment of the present disclosure;
FIG. 14 is an enlarged schematic view of Part M in FIG. 13;
FIG. 15 is a cross-sectional view of Part I in FIG. 14;
FIG. 16 is an enlarged schematic view of Part G in FIG. 13;
FIG. 17 is a cross-sectional view of Part K in FIG. 16;
FIG. 18 is a block diagram of a vehicle of the present disclosure.

### Reference signs:

100. shock absorption bracket; 110. main bracket portion; 111. mounting cavity; 1101. first mounting hole; 1102. second mounting hole; 112. connecting arm; 1121. third mounting hole; 113. dryer mounting seat; 120. auxiliary bracket portion; 1201. fourth mounting hole; 121. first auxiliary bracket portion; 122. second auxiliary bracket portion; 123. reinforcing rib; 200. first shock absorption member; 210. first mounting seat; 211. first connecting hole B; 212. first boss; 213. polygonal hole; 220. first buffer seat; 220A. first buffer seat A; 220B. first buffer seat B; 2201. first insertion slot; 221. first connecting hole A; 222. first connecting groove; 223. protrusion; 224. buffer hole; 230. elastic member; 300. second shock absorption member; 310. second mounting seat; 311. second connecting hole B; 312. second boss; 320. second buffer seat; 320A. second buffer seat A; 320B. second buffer seat B; 3201. second insertion slot; 321. second connecting hole A; 322. second connecting groove; 400. air compressor; 500. vehicle; 600. dryer; 700. connecting member.

### DETAILED DESCRIPTION

In the following description, numerous specific details are set forth in order to provide a more thorough understanding of the present disclosure. However, it will be apparent to those skilled in the art that the embodiments of the present disclosure may be practiced without one or more of these specific details. In other embodiments, well-known technical features in the art have not been described in order to avoid obscuring the embodiments of the present disclosure.

As used herein, ordinal numerals such as "first" and "second" cited in the present disclosure are merely identifiers and do not have any other meanings, such as a particular order. Moreover, for example, the term "first component" by itself does not imply the existence of a "second component", and the term "second component" by itself does not imply the existence of a "first component".

As used herein, terms such as "upper", "lower", "front", "rear", "left", and "right" are used only to indicate relative positional relationships between relevant parts, rather than to limit absolute positions of those relevant parts.

As used herein, terms such as "equal" and "same" are not strict mathematical and/or geometric limitations, but also comprise errors that are understandable to those skilled in the art and permissible in manufacturing or use, etc.

Unless otherwise specified, numerical ranges described herein comprise not only the entire range between their two endpoints, but also several sub-ranges subsumed therein.

Exemplary embodiments according to the present disclosure will now be described in greater detail with reference to the accompanying drawings. However, these exemplary embodiments may be embodied in many different forms and will not be construed as limited to only the embodiments set forth herein. It will be understood that these embodiments are provided so that this disclosure will be thorough and complete, and will fully convey the concept of these exemplary embodiments to those skilled in the art.

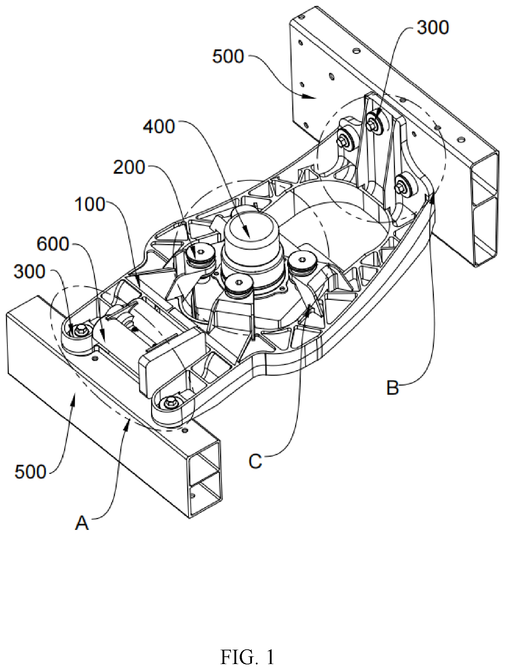

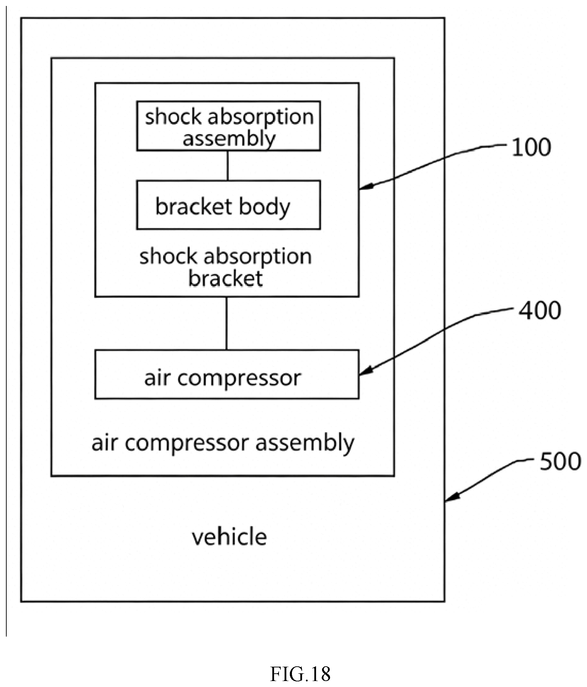

As shown in FIG. 1 and FIG. 18, the air compressor 400 is a device that compresses air and supplies high-pressure air. The air compressor 400 generates vibration during operation, which may cause the device to generate noise and accelerate wear of mechanical components. The vibration may also be transmitted to other devices or buildings through the ground or structures, affecting the normal operation of other systems. When the air compressor 400 is mounted to a mobile device such as a vehicle 500, the vehicle 500 itself generates vibration during travel, which originates from engine operation, uneven road surfaces, starting and stopping of the vehicle 500, and the like. When the air compressor 400 is in operation, its own vibration may be superimposed with the vibration generated by the vehicle 500, potentially causing more severe vibration issues.

To reduce the impact of the vehicle 500 during travel on the air compressor 400, the air compressor 400 of the vehicle 500 is typically mounted on a shock absorption bracket 100, and the shock absorption bracket 100 is connected to the vehicle body through a plurality of shock absorption members. The shock absorption members provide shock absorption for the bracket and the air compressor 400, mitigating the vibration experienced by the air compressor 400 caused by bumps during travel of the vehicle 500. In the present disclosure, shock absorption members are also arranged between the air compressor 400 and the shock absorption bracket 100 to achieve multi-stage shock absorption for the air compressor 400.

As shown in FIG. 1, FIG. 2, and FIG. 13, in the present disclosure, the bracket body of the shock absorption bracket 100 comprises a main bracket portion 110 and an auxiliary bracket portion 120. One end of the auxiliary bracket portion 120 is connected to an outer peripheral edge of the main bracket portion 110, and the other end of the auxiliary bracket portion 120 extends obliquely in a direction away from the main bracket portion 110. The main bracket portion 110 is configured to be connected to the vehicle 500, and the auxiliary bracket portion 120 is connected to the main bracket portion 110 and is configured to be connected to the vehicle 500. The main bracket portion 110 and the auxiliary bracket portion 120 can be connected to different mounting surfaces of the vehicle 500, providing high flexibility for the shock absorption bracket.

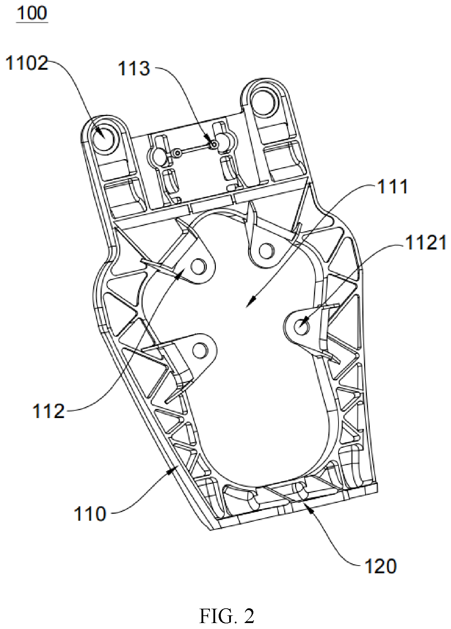

In some embodiments of the present disclosure, as shown in FIG. 1 and FIG. 2, the main bracket portion 110 and the auxiliary bracket portion 120 are integrally formed. An end of the main bracket portion 110 away from the auxiliary bracket portion 120 is connected to the vehicle 500 via a second shock absorption member 300. The auxiliary bracket portion 120 is connected to the vehicle 500 via a second shock absorption member 300.

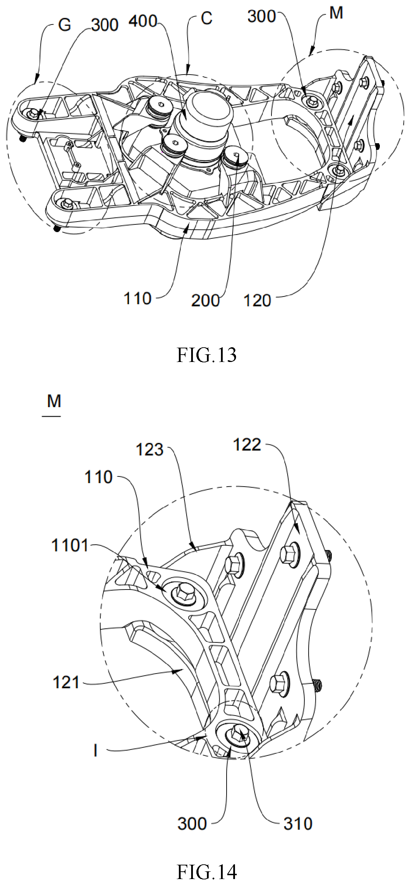

In some embodiments of the present disclosure, as shown in FIG. 13, the main bracket portion 110 and the auxiliary bracket portion 120 are separately arranged. In different mounting scenarios, the positions and connection methods of the main bracket portion 110 and the auxiliary bracket portion 120 can be flexibly adjusted. The separate provision makes maintenance more convenient, as one component can be separately serviced or replaced without affecting the working condition of other components. Moreover, the separate provision has a low manufacturing cost.

Exemplarily, as shown in FIG. 13, a second shock absorption member 300 is arranged at the connection between the main bracket portion 110 and the auxiliary bracket portion 120. An end of the main bracket portion 110 away from the auxiliary bracket portion 120 is connected via a second shock absorption member 300. By the provision of the second shock absorption member 300, vibration and impact forces transmitted between the main bracket portion 110 and the auxiliary bracket portion 120 can be effectively absorbed, protecting the stability and safety of the main bracket portion 110 and the auxiliary bracket portion 120. The second shock absorption member 300 can also help balance and stabilize the connection between the main bracket portion 110 and the auxiliary bracket portion 120, reducing instability factors caused by changes in the external environment, improving the stability of the overall structure, and prolonging service life.

In some embodiments of the present disclosure, as shown in FIG. 13 and FIG. 14, the auxiliary bracket portion 120 comprises a first auxiliary bracket portion 121 and a second auxiliary bracket portion 122. The first auxiliary bracket portion 121 is configured to be connected to the main bracket portion 110, and the second auxiliary bracket portion 122 is configured to be connected to the vehicle 500. By the provision of the auxiliary bracket portion 120 as two inclined portions, the mounting directions of the auxiliary bracket portion 120 with respect to the main bracket portion 110 and the vehicle 500 are different, so as to adapt to different installation environments. In an embodiment, the first auxiliary bracket portion 121 and the second auxiliary bracket portion 122 are inclined or perpendicular to each other. Correspondingly, the first auxiliary bracket portion 121 and the main bracket portion 110 are inclined or perpendicular to each other.

Based on the above embodiments, at least a portion of the first auxiliary bracket portion 121 is parallel to the main bracket portion 110 so as to be engaged with the main bracket portion 110. The second shock absorption member 300 is arranged at the joint portion of the main bracket portion 110 and the auxiliary bracket portion 120. By the provision of the second shock absorption member 300 at the joint portion of the main bracket portion 110 and the auxiliary bracket portion 120, the connection between the main bracket portion 110 and the auxiliary bracket portion 120 has a shock absorption effect, effectively absorbing and reducing vibration and impact forces transmitted from the vehicle 500.

In some embodiments of the present disclosure, a reinforcing rib 123 is arranged between the first auxiliary bracket portion 121 and the second auxiliary bracket portion 122. The provision of the reinforcing rib 123 improves the load-bearing capacity of the overall structure, making the bracket more stable and reliable when subjected to external pressure and loads.

In some embodiments of the present disclosure, as shown in FIG. 13, two ends of the main bracket portion 110 are respectively connected to the auxiliary bracket portion 120 and the vehicle 500. Specifically, a second shock absorption member 300 is arranged between the main bracket portion 110 and the auxiliary bracket portion 120, and a second shock absorption member 300 is arranged between the main bracket portion 110 and the vehicle 500.

In the present disclosure, by the provision of a plurality of shock absorption points, multi-stage shock absorption of the shock absorption bracket is achieved. The specific shock absorption methods of the shock absorption bracket are described below.

As shown in FIG. 13, the main bracket portion 110 has a first end and a second end opposite to each other. The first end of the main bracket portion 110 is connected to the auxiliary bracket portion 120. The second end of the main bracket portion 110 is connected to the vehicle 500.

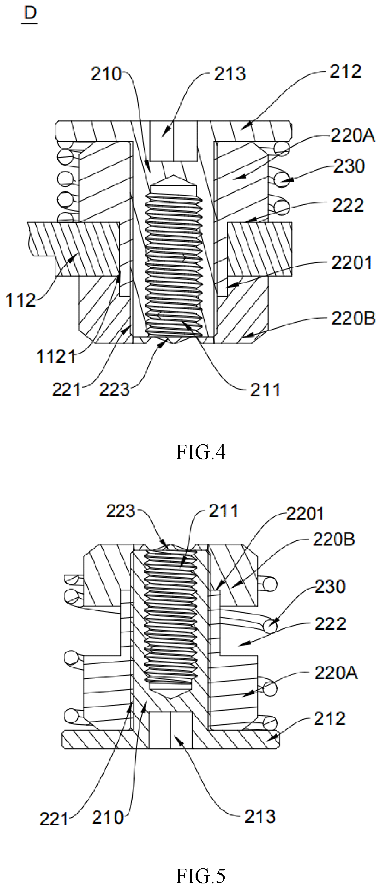

As shown in FIG. 14, a first mounting hole 1101 is arranged at the first end of the main bracket portion 110, and the second shock absorption member 300 is connected to the first mounting hole 1101, with at least a portion of the second shock absorption member 300 in the axial direction being connected to the auxiliary bracket portion 120. Referring to FIG. 4, a second mounting hole 1102 is arranged at the second end of the main bracket portion 110, and the second shock absorption member 300 is connected to the second mounting hole 1102, with at least a portion of the second shock absorption member 300 in the axial direction being connected to the vehicle 500.

The structure of the second shock absorption member 300 will be described below by taking the connection between the main bracket portion 110 and the auxiliary bracket portion 120 as an embodiment. It will be understood that the structure of the second shock absorption member 300 between the main bracket portion 110 and the vehicle 500 is similar.

As shown in Part C of FIG. 1 and FIG. 13, in some embodiments of the present disclosure, the air compressor 400 is mounted to a middle part of the main bracket portion 110, and the air compressor 400 is mounted to the bracket body through the first shock absorption member 200.

As shown in FIG. 4, FIG. 5, and FIG. 6, the first shock absorption member 200 comprises a first mounting seat 210, a first buffer seat 220, and an elastic member 230. The first buffer seat 220 is arranged with a first connecting hole A 221 in the axial direction. The first buffer seat 220 is sleeved on an outer side of the first mounting seat 210, and the first mounting seat 210 is mounted in the first connecting hole A 221. The first mounting seat 210 is arranged with a first connecting hole B 211 in the axial direction. A first connecting groove 222 is formed on an outer peripheral side of the first buffer seat 220. The elastic member 230 is sleeved on an outer periphery of the first buffer seat 220, one end of the elastic member 230 is connected to the first mounting seat 210, and the other end of the elastic member 230 is configured to be connected to the main bracket portion 110.

In some embodiments of the present disclosure, as shown in FIG. 4, FIG. 5, and FIG. 6, the first buffer seat 220 comprises a first buffer seat A 220A and a first buffer seat B 220B. The first buffer seat A 220A is plug-in connected with the first buffer seat B 220B, and the outer peripheral sides of the first buffer seat A 220A and the first buffer seat B 220B are at least partially spaced apart in the axial direction to form the first connecting groove 222. The first buffer seat A 220A being plug-in connected with the first buffer seat B 220B simplifies the disassembly and assembly operations of the first shock absorption member 200 and reduces maintenance and replacement costs. The first connecting groove 222 is formed between the first buffer seat A 220A and the first buffer seat B 220B, and the first connecting groove 222 extends in a circumferential direction of the first buffer seat 220. The first connecting groove 222 is configured to be connected to the shock absorption bracket 100. When subjected to vibration, the first buffer seat 220 can arrange axial and radial buffering. The first connecting groove 222, serving as a part connected to the main bracket portion 110, has sufficient contact area and stability in the axial direction and the radial direction at the connection, so that the connection between structures is not easily loosened or detached even under vibration conditions.

In some embodiments of the present disclosure, as shown in FIG. 4 and FIG. 5, the first buffer seat B 220B is arranged with a first insertion slot 2201, and the first buffer seat A 220A is plug-in connected with the first insertion slot 2201. The plug-in connection between the first buffer seat A 220A and the first insertion slot 2201 simplifies the installation process and ensures precise positioning between them, thereby ensuring positional accuracy and high efficiency during installation of the first buffer seat A 220A and the first buffer seat B 220B.

In an embodiment, the first buffer seat A 220A and the first buffer seat B 220B may be made of different materials, so as to improve the strength and rigidity of the entire shock absorption structure to a certain extent.

When subjected to external forces (such as vibration or impact), relative displacement generated by the plug-in connection between the buffer seats can absorb a certain amount of energy and disperse the impact force exerted on the structure.

In the present embodiment, since the plug-in connection allows a certain range of fine adjustment, it can adapt to different requirements for shock absorption performance when the external environment or load changes.

In one embodiment, as shown in FIG. 4 and FIG. 5, the first mounting seat 210 is arranged with a first boss 212 protruding radially outward. The first boss 212 may serve as a positioning reference, ensuring that the buffer seats are precisely aligned and abutted against correct positions during installation. This positioning manner helps ensure the performance and function of the first shock absorption member 200.

In an embodiment, as shown in FIG. 4 and FIG. 5, a first end of the first buffer seat A 220A abuts against the first boss 212, and a second end of the first buffer seat A 220A is connected to the first buffer seat B 220B. The first boss 212 increases the contact area between the first mounting seat 210 and the first buffer seat A 220A, and also forms a stop for the first buffer seat A 220A, thereby improving the structural strength and stability at the connection. By simply abutting the end of the first buffer seat A 220A against the first boss 212, the assembly process becomes simple and intuitive, which not only reduces the requirement for specialized skills but also accelerates the assembly speed.

In an embodiment, a radial dimension of the first boss 212 is larger than a radial dimension of the first buffer seat A 220A. The elastic member 230 is further arranged, which is sleeved on the outer periphery of the first buffer seat A 220A, and abuts against the first boss 212. The first boss 212 forms a stop for the elastic member 230. When mounted to an external structure, the elastic member 230 can be arranged between the first boss 212 and the main bracket portion 110, further attenuating axial vibration.

In one embodiment, a protrusion 223 is arranged on an end surface of the first buffer seat B 220B away from the first buffer seat A 220A, the protrusion 223 extending in a direction away from the first buffer seat B 220B. In an embodiment, the protrusion 223 tapers in a direction away from the first buffer seat B 220B. That is, the rigidity of the protrusion 223 decreases in the direction away from the first buffer seat B 220B, and the deformability thereof increases. In an embodiment, a plurality of the protrusions 223 are arranged in a circumferential array. The circumferentially arrayed protrusions 223 can uniformly distribute loads around the entire buffer seat, so that impact or vibration forces act more uniformly on the shock absorption member, avoiding local overload. Since the protrusions 223 are uniformly distributed in the circumferential direction, the entire first shock absorption member 200 is more stable, enabling it to maintain balance when subjected to external forces. In an embodiment, buffer holes 224 are further arranged, and the buffer holes 224 extend from the first connecting groove 222 to the protrusions 223. The provision of the buffer holes 224 increases the elasticity and deformability of the first buffer seat B 220B.

In another embodiment, as shown in FIG. 4 and FIG. 5, a protrusion 223 is arranged on an end surface of the first buffer seat A 220A away from the first buffer seat B 320B. The protrusion 223 of the first buffer seat A 220A abuts against the first boss 212.

In one embodiment, as shown in FIG. 4 and FIG. 5, the first connecting hole is internally threaded. The first connecting hole can be connected to the main bracket portion 110 by bolts or other similar connecting members 700, and these connecting members 700 can provide a stable, reliable and flexible connection effect.

In an embodiment, the first connecting hole B 211 does not extend through the first mounting seat 210. The first mounting seat 210 is further arranged with a polygonal hole 213, and the polygonal hole 213 is coaxial with the first connecting hole B 211. In an embodiment, the polygonal hole 213 is a hexagonal hole. By rotating the bolt connected to the first connecting hole B 211 or by rotating the polygonal hole 213, the relative position between the bolt and the first connecting hole B 211 can be adjusted. That is, the relative position between the first shock absorption member 200 and the main bracket portion 110 can be adjusted.

Based on the above embodiments, as shown in FIG. 1 and FIG. 13, the first shock absorption member 200 is arranged at a middle part of the main bracket portion 110 to mount the air compressor 400. Specifically, the main bracket portion 110 is embedded in the first connecting groove 222 of the first shock absorption member 200. The air compressor 400 is coupled with the first connecting hole B 211 by a bolt or other connecting member 700 to connect with the first shock absorption member 200, thereby being mounted to the shock absorption bracket 100.

In some embodiments of the present disclosure, as shown in FIG. 2, a middle part of the main bracket portion 110 is hollowed out to form a mounting cavity 111, and a plurality of connecting arms 112 are arranged around the mounting cavity 111. The air compressor 400 is mounted to the shock absorption bracket 100 through the connecting arms 112, and the air compressor 400 is at least partially located in the mounting cavity 111. In this embodiment, the air compressor 400 is mounted to the shock absorption bracket 100 through the first shock absorption member 200.

As shown in FIG. 4, in some embodiments of the present disclosure, the connecting arm 112 is arranged with a third mounting hole 1121, the first shock absorption member 200 extends through the third mounting hole 1121, and a portion of the connecting arm 112 at a peripheral edge of the third mounting hole 1121 is embedded in the first connecting groove 222. The connecting arm 112 being embedded in the first connecting groove 222 achieves a secure connection between the first shock absorption member 200 and the connecting arm 112, ensuring that they do not become loose or detached during use. Thus, external forces can be transmitted more effectively, so that the entire bracket structure can better withstand vibration and impact.

In this embodiment, the provision of the first shock absorption member 200 provides shock absorption in the axial direction and the radial direction for the shock absorption bracket 100. Specifically, the connecting arm 112 is embedded in the first connecting groove 222, and one end surface of the first shock absorption member 200 abuts against the air compressor 400. Vibration of the air compressor 400 is dispersed and absorbed by the first shock absorption member 200. Vibration of the connecting arm 112 (the shock absorption bracket 100) is dispersed and absorbed by the first shock absorption member 200.

Based on the above embodiments, one end of the elastic member 230 abuts against the first boss 212, and the other end of the elastic member 230 abuts against the connecting arm 112. When the first shock absorption member 200 is connected to the air compressor 400, the provision of the elastic member 230 alleviates vibration between the air compressor 400 and the bracket, and also reduces noise generated by the air compressor 400, improving the comfort of the working environment.

Vibration of the connecting arm 112 can be transmitted to the first buffer seat 220 through the first boss 212 and the elastic member 230, making load transmission more uniform and effective.

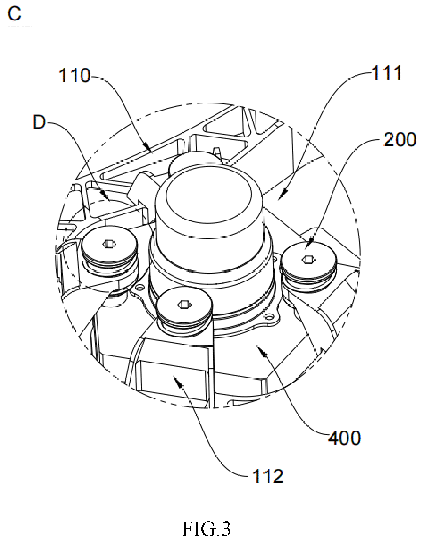

From the above, it can be seen that the air compressor 400 is connected to the shock absorption bracket 100 via the first shock absorption member 200 as shown in FIG. 5 to FIG. 6 and through the connection method as shown in FIG. 3 to FIG. 4, thereby achieving primary shock absorption. Specifically, the connecting arm 112 is embedded in the first connecting groove 222, that is, an inner peripheral wall of the third mounting hole 1121 of the connecting arm 112 and upper and lower surfaces of a peripheral edge of the third mounting hole 1121 are wrapped by the first buffer seat 220. Thus, the first shock absorption member 200 can arrange buffering for the connecting arm 112 in the radial direction and the axial direction of the first shock absorption member 200. When vibration occurs, the first buffer seat 220 can provide a certain amount of elastic deformation in the radial direction and the axial direction. During vibration transmission, the first buffer seat 220 can absorb part of the vibration energy, thereby dispersing and absorbing part of the vibration energy to reduce the impact on the air compressor 400 and the shock absorption bracket 100. Two ends of the elastic member 230 respectively abut against the boss and the connecting arm 112, thereby providing buffering in the axial direction of the elastic member 230. An end portion of the first buffer seat B 220B away from the first buffer seat A 220A abuts against the air compressor 400, thereby providing buffering in the axial direction of the first buffer seat 220.

The air compressor 400 itself generates vibration during operation. The air compressor 400 is in direct contact with the first buffer seat B 220B. When vibration generated by the air compressor 400 is transmitted to the shock absorption bracket 100, or when vibration generated by the shock absorption bracket 100 is transmitted to the air compressor 400, such vibration is transmitted to the first shock absorption member 200 through the direct contact. In the transmission path of vibration from the air compressor 400, vibration energy is gradually transmitted from the air compressor 400 to the shock absorption bracket 100. During transmission, the vibration energy is attenuated when passing through the first buffer seat B 220B. At this time, the first shock absorption member 200 absorbs and disperses part of the vibration energy, thereby reducing the impact of vibration on the air compressor 400 and the vehicle 500.

Referring to Part A and Part B of FIG. 1, in some embodiments of the present disclosure, the main bracket portion 110 is connected to the vehicle 500 via the second shock absorption member 300. The auxiliary bracket portion 120 is connected to the vehicle 500 via the second shock absorption member 300.

Referring to Part G and Part M of FIG. 13, in some embodiments of the present disclosure, one end of the main bracket portion 110 is connected to the vehicle 500 via the second shock absorption member 300. The other end of the main bracket portion 110 is connected to the auxiliary bracket portion 120 via the second shock absorption member 300, and the auxiliary bracket portion 120 is connected to the vehicle 500.

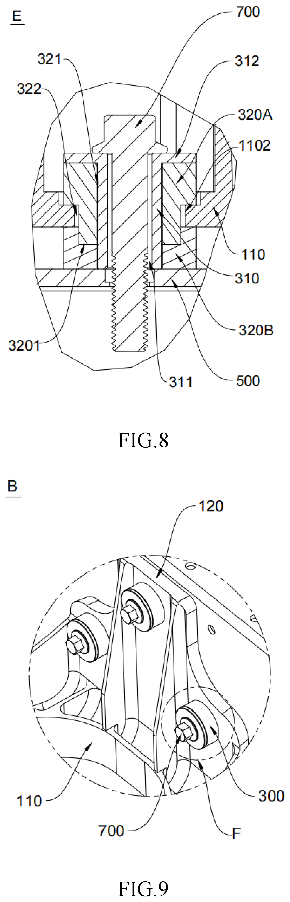

As shown in FIG. 8, FIG. 10, FIG. 11, and FIG. 12, the second shock absorption member 300 comprises a second mounting seat 310 and a second buffer seat 320. The second buffer seat 320 is arranged with a second connecting hole A 321 in the axial direction. The second buffer seat 320 is sleeved on an outer side of the second mounting seat 310, and the second mounting seat 310 is mounted in the second connecting hole A 321. The second mounting seat 310 is arranged with a second connecting hole B 311 in the axial direction. A second connecting groove 322 is formed on an outer peripheral side of the second buffer seat 320.

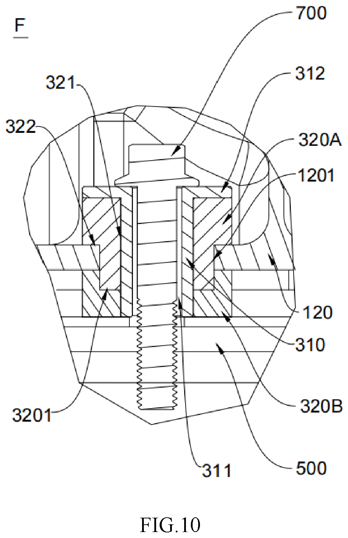

In some embodiments of the present disclosure, as shown in FIG. 8 and FIG. 10, the second buffer seat 320 comprises a second buffer seat A 320A and a second buffer seat B 320B. The second buffer seat A 320A is plug-in connected with the second buffer seat B 320B. Outer peripheral sides of the second buffer seat A 320A and the second buffer seat B 320B are at least partially spaced apart in the axial direction to form the second connecting groove 322. The second buffer seat A 320A being plug-in connected with the second buffer seat B 320B simplifies the disassembly and assembly operations of the second shock absorption member 300 and reduces maintenance and replacement costs. The second connecting groove 322 is formed between the second buffer seat A 320A and the second buffer seat B 320B, and the second connecting groove 322 extends in a circumferential direction of the buffer seat. The second connecting groove 322 is configured to be connected to the shock absorption bracket 100. When subjected to vibration, the provision of the second buffer seat 320 provides axial and radial buffering. The second connecting groove 322, serving as a part connected to the shock absorption bracket 100, has sufficient contact area and stability in the axial direction at the connection, so that the connection between structures is not easily loosened or detached even under vibration conditions.

In some embodiments of the present disclosure, as shown in FIG. 8 and FIG. 10, the second buffer seat B 320B is arranged with a second insertion slot 3201, and the second buffer seat A 320A is plug-in connected with the second insertion slot 3201. The plug-in connection between the second buffer seat A 320A and the second insertion slot 3201 simplifies the installation process and ensures precise positioning between them, thereby ensuring positional accuracy and high efficiency during installation of the second buffer seat A 320A and the second buffer seat B 320B.

In an embodiment, the second buffer seat A 320A and the second buffer seat B 320B may be made of different materials, so as to improve the strength and rigidity of the entire shock absorption structure to a certain extent.

When subjected to external forces (such as vibration or impact), relative displacement generated by the plug-in connection between the second buffer seats 320 can absorb a certain amount of energy and disperse the impact force exerted on the structure.

In the present embodiment, since the plug-in connection allows a certain range of fine adjustment, it can adapt to different requirements for shock absorption performance when the external environment or load changes.

In one embodiment, as shown in FIG. 8 and FIG. 10, the second mounting seat 310 is arranged with a second boss 312 protruding radially outward. The second boss 312 may serve as a positioning reference, ensuring that the buffer seats are precisely aligned and abutted against correct positions during installation. This positioning manner helps ensure the performance and function of the second shock absorption member 300.

In an embodiment, one end of the second buffer seat A 320A abuts against the second boss 312, and the second end of the second buffer seat A 320A is connected to the second buffer seat B 320B. The second boss 312 increases the contact area between the second mounting seat 310 and the second buffer seat A 320A, thereby improving the structural strength and stability at the connection. By simply abutting the end of the second buffer seat A 320A against the second boss 312, the assembly process becomes simple and intuitive, which not only reduces the requirement for specialized skills but also accelerates the assembly speed.

In one embodiment, as shown in FIG. 8 and FIG. 10, the second connecting hole B 311 extends through the second mounting seat 310. In an embodiment, the second connecting hole B 311 may be connected to the vehicle 500 by a bolt, a pin, a shaft, or other similar connecting members 700, and these connecting members 700 can provide a stable, reliable, and flexible connection effect.

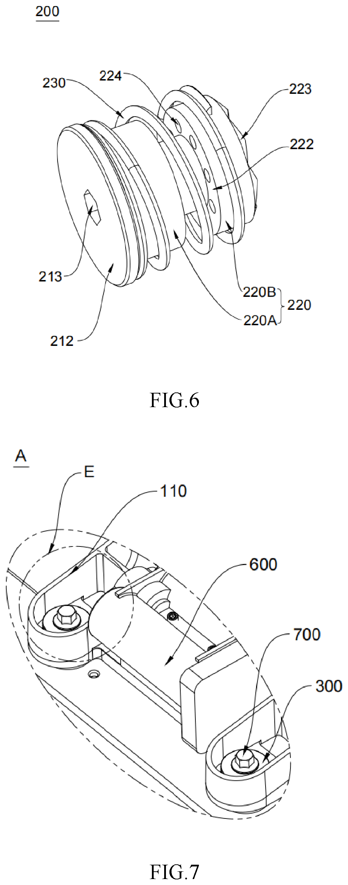

Based on the above embodiments, as shown in FIG. 7, FIG. 8, FIG. 9, and FIG. 10, a second mounting hole 1102 is arranged at an end portion of the main bracket portion 110 away from the auxiliary bracket portion 120, and the second shock absorption member 300 is connected to the second mounting hole 1102. A fourth mounting hole 1201 is arranged at an end portion of the auxiliary bracket portion 120 away from the main bracket portion 110, and the second shock absorption member 300 is connected to the fourth mounting hole 1201. Thus, the shock absorption bracket 100 can be mounted to the vehicle 500 through mounting points in multiple directions.

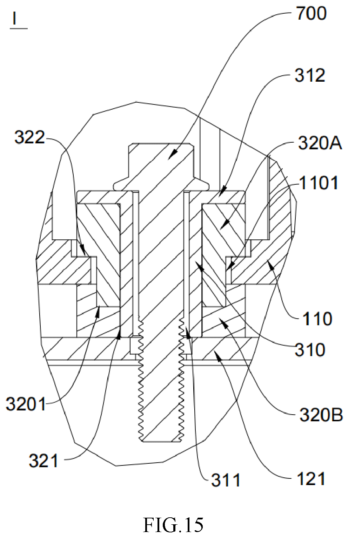

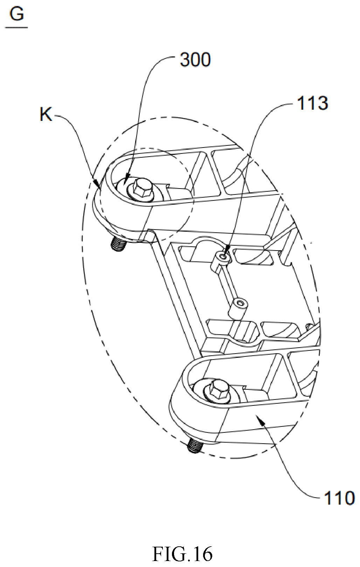

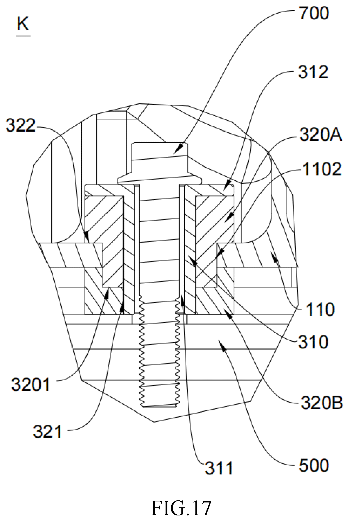

In some embodiments of the present disclosure, as shown in FIG. 14, FIG. 15, FIG. 16, and FIG. 17, a second mounting hole 1102 is arranged at an end portion of the main bracket portion 110 away from the auxiliary bracket portion 120, and the second shock absorption member 300 is connected to the second mounting hole 1102. A first mounting hole 1101 is arranged at an end portion of the main bracket portion 110 adjacent to the auxiliary bracket portion 120, and the second shock absorption member 300 is connected to the first mounting hole 1101, and connects the main bracket portion 110 and the auxiliary bracket portion 120 via the second shock absorption member 300.

The connection structure between the main bracket portion 110 and the second shock absorption member 300 will be described below as an embodiment. It will be understood that the connection structure between the auxiliary bracket portion 120 and the second shock absorption member 300 is similar.

As shown in FIG. 7, FIG. 8, FIG. 16, and FIG. 17, a second mounting hole 1102 is arranged at an end portion of the main bracket portion 110 away from the auxiliary bracket portion 120. The second shock absorption member 300 extends through the second mounting hole 1102, and a portion of the main bracket portion 110 at a peripheral edge of the second mounting hole 1102 is embedded in the second connecting groove 322. The main bracket portion 110 being embedded in the second connecting groove 322 achieves a secure connection between the second shock absorption member 300 and the main bracket portion 110, ensuring that they do not become loose or detached during use. Thus, external forces can be transmitted more effectively, so that the entire bracket structure can better withstand vibration and impact.

In this embodiment, the provision of the second shock absorption member 300 provides shock absorption in the axial direction and the radial direction for the shock absorption bracket 100. Specifically, the main bracket portion 110 is embedded in the second connecting groove 322, and one end surface of the second shock absorption member 300 abuts against the vehicle 500. Vibration of the vehicle 500 is dispersed and absorbed by the second shock absorption member 300. Vibration of the main bracket portion 110 (the shock absorption bracket 100) is dispersed and absorbed by the second shock absorption member 300.

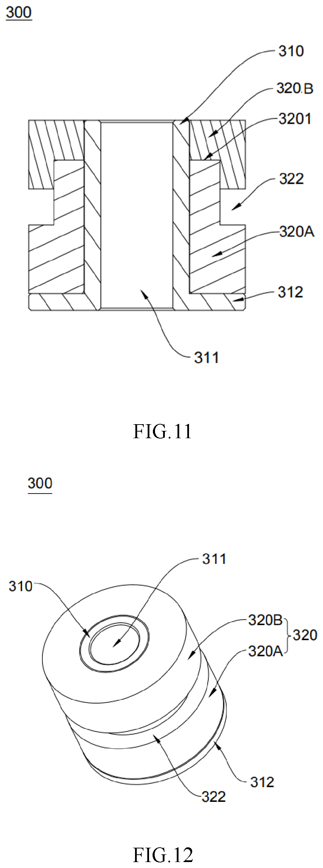

From the above, it can be seen that the shock absorption bracket 100 is connected to the vehicle 500 via the second shock absorption member 300 as shown in FIG. 11 to FIG. 12 and through the connection method as shown in FIG. 7 to FIG. 10, thereby achieving secondary shock absorption for the air compressor 400. Specifically, the main bracket portion 110 is embedded in the second connecting groove 322, that is, an inner peripheral wall of the second mounting hole 1102 of the main bracket portion 110 and upper and lower surfaces of a peripheral edge of the second mounting hole 1102 are wrapped by the second buffer seat 320. Thus, the second shock absorption member 300 can provide buffering for the main bracket portion 110 in the radial direction and the axial direction of the second shock absorption member 300. When vibration occurs, the second buffer seat 320 can provide a certain amount of elastic deformation in the radial direction and the axial direction. During vibration transmission, the second buffer seat 320 can absorb part of the vibration energy, thereby dispersing and absorbing part of the vibration energy to reduce the impact on the shock absorption bracket 100 and the vehicle 500. An end portion of the second buffer seat B 320B away from the second buffer seat A 320A abuts against the vehicle 500, thereby providing buffering in the axial direction of the second buffer seat 320. The connection structure between the auxiliary bracket portion 120 and the second shock absorption member 300 is similar to the connection structure between the main bracket portion 110 and the second shock absorption member 300.

The shock absorption bracket 100 is mounted to the vehicle 500 via the second shock absorption member 300. The second buffer seat B 320B is in direct contact with the vehicle 500. When vibration generated by the shock absorption bracket 100 is transmitted to the vehicle 500, or when vibration generated by the vehicle 500 is transmitted to the shock absorption bracket 100, such vibration is transmitted to the second shock absorption member 300 through the direct contact. In the transmission path of vibration from the vehicle 500, vibration energy is gradually transmitted from the vehicle 500 to the shock absorption bracket 100. During transmission, the vibration energy is attenuated when passing through the second buffer seat B 320B. At this time, the second shock absorption member 300 absorbs and disperses part of the vibration energy, thereby reducing the impact of vibration on the air compressor 400 and the vehicle 500.

From the foregoing, it can be seen that the air compressor 400 is connected to the shock absorption bracket 100 via the first shock absorption member 200, achieving primary shock absorption. The shock absorption bracket 100 is connected to the vehicle 500 via the second shock absorption member 300, achieving secondary shock absorption.

The provision of the shock absorption bracket 100, the first shock absorption member 200, and the second shock absorption member 300 isolates vibration between the air compressor 400 and the vehicle 500. The first shock absorption member 200 is arranged between the shock absorption bracket 100 and the air compressor 400, achieving shock absorption in the axial direction and the radial direction of the first shock absorption member 200, while the elastic member 230 enhances shock absorption in the axial direction between them. The shock absorption bracket 100 is configured with the main bracket portion 110 and the auxiliary bracket portion 120 inclined relative to each other, so that the shock absorption bracket 100 can be mounted to different mounting surfaces, and shock absorption in the axial direction and the radial direction of the second shock absorption member 300 is achieved through the second shock absorption member 300. By using shock absorption members having the functions of limiting, uniformly distributing loads, and multi-point energy absorbing, shock absorption is achieved between the respective connection portions, and the stability and reliability of the entire shock absorption bracket 100 are enhanced.

The shock absorption bracket 100 comprises a main bracket portion 110 and an auxiliary bracket portion 120 that are inclined relative to each other, a configuration that can adapt to mounting surfaces at different angles, so that the air compressor 400 can be mounted and fixed even in complex or irregular spaces. Shock absorption members are arranged on the main bracket portion 110 and the auxiliary bracket portion 120, achieving both multi-dimensional shock absorption and multi-stage shock absorption.

In some embodiments of the present disclosure, a dryer mounting seat 113 is arranged at the first end of the main bracket portion 110. In an embodiment, the dryer mounting seat 113 is arranged at an end of the main bracket portion 110 away from the auxiliary bracket portion 120 and is located between the two second mounting holes 1102.

In some embodiments of the present disclosure, the dryer mounting seat 113 is configured to mount a dryer 600.

The present disclosure also provides an air compressor assembly, comprising the shock absorption bracket 100 according to any of the above embodiments.

The present disclosure also provides a vehicle, comprising the air compressor assembly described above.

The present disclosure also provides a shock absorption assembly, comprising the first shock absorption member 200 and/or the second shock absorption member 300 in the above embodiments.

Unless otherwise defined, technical and scientific terms used herein have the same meaning as commonly understood by one of ordinary skill in the technical field of the present disclosure. The terms used herein are for the purpose of describing specific embodiments only and are not intended to limit the present disclosure. Terms such as "arranged" as used herein may mean that one component is directly attached to another component or that one component is attached to another component via an intermediate member. Features described in one embodiment herein may be applied to another embodiment alone or in combination with other features, unless such features are inapplicable to that other embodiment or otherwise specified.

The present disclosure has been described by way of the above embodiments, but it will be understood that the above embodiments are for purposes of illustration and description only, and are not intended to limit the present disclosure to the scope of the described embodiments. It will be appreciated by those skilled in the art that many more variations and modifications are possible in light of the teachings of the present disclosure, and such variations and modifications fall within the scope of the present disclosure as claimed.

## Claims

1. A shock absorption assembly, comprising:
a second shock absorption member (300), the second shock absorption member (300) comprising:
a second buffer seat (320), the second buffer seat (320) being arranged with a second connecting hole A (321) in an axial direction, and a second connecting groove (322) being formed on an outer peripheral side of the second buffer seat (320).

2. The shock absorption assembly according to claim 1, further comprising:
a first shock absorption member (200), the first shock absorption member (200) comprising:
a first mounting seat (210), the first mounting seat (210) being arranged with a first connecting hole B (211) in the axial direction;
a first buffer seat (220), the first buffer seat (220) being sleeved on an outer side of the first mounting seat (210), and a first connecting groove (222) being formed on an outer peripheral side of the first buffer seat (220);
an elastic member (230), the elastic member (230) being sleeved on an outer periphery of the first buffer seat (220), one end of the elastic member (230) being connected to the first mounting seat (210), and the other end of the elastic member (230) being configured to be connected to an external structure.

3. The shock absorption assembly according to claim 2, wherein
the first buffer seat (220) comprises a first buffer seat A (220A) and a first buffer seat B (220B), the first buffer seat A (220A) is plug-in connected with the first buffer seat B (220B), and the outer peripheral sides of the first buffer seat A (220A) and the first buffer seat B (220B) are at least partially spaced apart in the axial direction to form the first connecting groove (222);
and/or,
the second buffer seat (320) comprises a second buffer seat A (320A) and a second buffer seat B (320B), the second buffer seat A (320A) is plug-in connected with the second buffer seat B (320B), and the outer peripheral sides of the second buffer seat A (320A) and the second buffer seat B (320B) are at least partially spaced apart in the axial direction to form the second connecting groove (322).

4. The shock absorption assembly according to claim 2, wherein the first buffer seat (220) is arranged with protrusions (223) extending in the axial direction.

5. The shock absorption assembly according to claim 4, wherein the protrusions (223) taper in a direction away from the first buffer seat (220).

6. The shock absorption assembly according to claim 4, wherein a plurality of the protrusions (223) are arranged in a circumferential array.

7. The shock absorption assembly according to claim 2, wherein the first buffer seat (220) is further arranged with buffer holes (224), and the buffer holes (224) extend through the first buffer seat (220) in the axial direction.

8. The shock absorption assembly according to claim 2, wherein the first mounting seat (210) is arranged with a first boss (212) protruding radially outward, a radial dimension of the first boss (212) is larger than that of the first buffer seat (220), and the elastic member (230) abuts against the first boss (212).

9. The shock absorption assembly according to claim 2, wherein the first connecting hole B (211) is internally threaded.

10. The shock absorption assembly according to claim 9, wherein the first mounting seat (210) is further arranged with a polygonal hole (213), and the polygonal hole (213) is coaxial with the first connecting hole B (211).

11. The shock absorption assembly according to claim 2, wherein the second shock absorption member (300) is further arranged with a second mounting seat (310), the second mounting seat (310) is inserted into the second connecting hole A (321), and the second mounting seat (310) is arranged with a second connecting hole B (311) in the axial direction.

12. The shock absorption assembly according to claim 11, wherein the second connecting hole B (311) extends through the second mounting seat (310) in the axial direction.

13. A shock absorption bracket (100), comprising:
a main bracket portion (110), the main bracket portion (110) being arranged to be connected to an external structure;
an auxiliary bracket portion (120), the auxiliary bracket portion (120) being connected to the main bracket portion (110), and the auxiliary bracket portion (120) being arranged to be connected to an external structure;
the shock absorption assembly according to any one of claims 1 to 12, wherein the main bracket portion (110) and the auxiliary bracket portion (120) are connected by the second shock absorption member (300).

14. The shock absorption bracket (100) according to claim 13, wherein the auxiliary bracket portion (120) comprises a first auxiliary bracket portion (121) and a second auxiliary bracket portion (122), the first auxiliary bracket portion (121) is configured to be connected to the main bracket portion (110), and the second auxiliary bracket portion (122) is arranged to be connected to the external structure;
at least a portion of the first auxiliary bracket portion (120) is parallel to the main bracket portion (110) so as to be engaged with the main bracket portion (110); wherein
the second shock absorption member (300) is arranged at the joint portion of the main bracket portion (110) and the auxiliary bracket portion (120).

15. The shock absorption bracket (100) according to claim 14, wherein the first auxiliary bracket portion (121) and the second auxiliary bracket portion (122) are inclined or perpendicular to each other.

16. The shock absorption bracket (100) according to claim 14, wherein a reinforcing rib (123) is arranged between the first auxiliary bracket portion (121) and the second auxiliary bracket portion (122).

17. The shock absorption bracket (100) according to claim 14, wherein the second shock absorption member (300) comprises a second buffer seat (320), and a second connecting groove (322) is formed on an outer peripheral side of the second buffer seat (320).

18. The shock absorption bracket (100) according to claim 17, wherein
the second shock absorption member (300) further comprises a second mounting seat (310);
the second buffer seat (320) comprises:
a second buffer seat A (320A), the second buffer seat A (320A) being sleeved on an outer side of the second mounting seat (310);
a second buffer seat B (320B), the second buffer seat B (320B) being sleeved on an outer side of the second mounting seat (310), the second buffer seat A (320A) and the second buffer seat B (320B) are plug-in connected, and the outer peripheral sides of the second buffer seat A (320A) and the second buffer seat B (320B) are at least partially spaced apart in the axial direction to form the second connecting groove (322).

19. The shock absorption bracket (100) according to claim 17 or 18, wherein a first end of the main bracket portion (110) is arranged with a first mounting hole (1101), and the second shock absorption member (300) extends through the first mounting hole (1101), wherein
a peripheral edge of the first mounting hole (1101) is embedded in the second connecting groove (322) to reduce vibration in the axial direction and the radial direction of the second buffer seat (320);
at least a portion of the second buffer seat (320) in the axial direction is configured to abut against the first auxiliary bracket portion (121) to reduce vibration in the axial direction of the second buffer seat (320).

20. The shock absorption bracket (100) according to claim 17 or 18, wherein a second end of the main bracket portion (110) is arranged with a second mounting hole (1102), and the second shock absorption member (300) extends through the second mounting hole (1102), wherein
a peripheral edge of the second mounting hole (1102) is embedded in the second connecting groove (322) to reduce vibration in the axial direction and the radial direction of the second buffer seat (320);
at least a portion of the second buffer seat (320) in the axial direction is configured to abut against a vehicle (500) to reduce vibration in the axial direction of the second buffer seat (320).

21. The shock absorption bracket (100) according to claim 13, wherein the main bracket portion (110) is connected to an air compressor (400) through a first shock absorption member (200).

22. The shock absorption bracket (100) according to claim 21, wherein the first shock absorption member (200) comprises:
a first mounting seat (210);
a first buffer seat (220), the first buffer seat (220) being sleeved on an outer side of the first mounting seat (210), and a first connecting groove (222) being formed on an outer peripheral side of the first buffer seat (220);
an elastic member (230), the elastic member (230) being sleeved on an outer periphery of the first buffer seat (220), one end of the elastic member (230) being connected to the first mounting seat (210), and the other end of the elastic member (230) being configured to be connected to the air compressor (400).

23. The shock absorption bracket (100) according to claim 22, wherein the main bracket portion (110) is arranged with a connecting arm (112), and the first shock absorption member (200) is connected to the connecting arm (112);
the connecting arm (112) is arranged with a third mounting hole (1121), the first shock absorption member (200) extends through the third mounting hole (1121), and a peripheral edge of the third mounting hole (1121) is embedded in the first connecting groove (222) to reduce vibration in the axial direction and the radial direction of the first buffer seat (220);
the elastic member (230) abuts against the connecting arm (112) to reduce vibration in the axial direction of the first buffer seat (220);
at least a portion of the first buffer seat (220) in the axial direction is configured to abut against the air compressor (400) to reduce vibration in the axial direction of the first buffer seat (220).

24. The shock absorption bracket (100) according to claim 23, wherein one end of the connecting arm (112) is connected to a middle part of the main bracket portion (110), the other end of the connecting arm (112) extends obliquely in a direction away from the main bracket portion (110), and at least a portion of the connecting arm (112) is spaced apart from the main bracket portion (110).

25. The shock absorption bracket (100) according to claim 23, wherein a mounting cavity (111) is formed in a middle part of the main bracket portion (110), and the connecting arm (112) is arranged around the mounting cavity (111).

26. The shock absorption bracket (100) according to claim 22, wherein the first buffer seat (220) comprises a first buffer seat A (220A) and a first buffer seat B (220B), the first buffer seat A (220A) is plug-in connected with the first buffer seat B (220B), and the outer peripheral sides of the first buffer seat A (220A) and the first buffer seat B (220B) are at least partially spaced apart in the axial direction to form the first connecting groove (222).

27. The shock absorption bracket (100) according to claim 13, wherein a dryer mounting seat (113) is arranged at the second end of the main bracket portion (110).

28. A shock absorption bracket (100), comprising a bracket body and the shock absorption assembly according to any one of claims 2 to 12, wherein a first shock absorption member (200) is configured to be connected to an air compressor (400), and a second shock absorption member (300) is configured to be connected to a vehicle body.

29. The shock absorption bracket (100) according to claim 28, wherein the first shock absorption member (200) is located in a middle part of the bracket body, the first connecting groove (222) is connected to the bracket body, the elastic member (230) abuts against the bracket body, the first connecting hole B (211) is configured to be connected to the air compressor (400), and at least a portion of the first buffer seat (220) in the axial direction is configured to abut against the air compressor (400);
the second shock absorption member (300) is located at an end part of the bracket body, the second connecting groove (322) is connected to the bracket body, the second connecting hole B (311) is configured to be connected to the vehicle body, and at least a portion of the second buffer seat (320) in the axial direction is configured to abut against the vehicle body.

30. The shock absorption bracket (100) according to claim 28, wherein the bracket body comprises a main bracket portion (110) and an auxiliary bracket portion (120), one end of the auxiliary bracket portion (120) is connected to an outer peripheral edge of the main bracket portion (110), and the other end of the auxiliary bracket portion (120) extends obliquely in a direction away from the main bracket portion (110).

31. The shock absorption bracket (100) according to claim 30, wherein the bracket body further comprises a connecting arm (112), one end of the connecting arm (112) is connected to a middle part of the main bracket portion (110), the other end of the connecting arm (112) extends obliquely in a direction away from the main bracket portion (110), and at least a portion of the connecting arm (112) is spaced apart from the main bracket portion (110); wherein
the first connecting groove (222) is connected to the connecting arm (112) to reduce vibration in the axial direction and the radial direction of the first buffer seat (220);
the elastic member (230) abuts against the connecting arm (112) to reduce vibration in the axial direction of the first buffer seat (220);
at least a portion of the first buffer seat (220) in the axial direction is configured to abut against the air compressor (400) to reduce vibration in the axial direction of the first buffer seat (220).

32. The shock absorption bracket (100) according to claim 31, wherein a mounting cavity (111) is formed in a middle part of the main bracket portion (110), and the connecting arm (112) is arranged around the mounting cavity (111).

33. The shock absorption bracket (100) according to claim 31 or 32, wherein the connecting arm (112) is arranged with a third mounting hole (1121), the first shock absorption member (200) extends through the third mounting hole (1121), and a peripheral edge of the third mounting hole (1121) is embedded in the first connecting groove (222).

34. The shock absorption bracket (100) according to claim 30, wherein the main bracket portion (110) is arranged with a second mounting hole (1102), and the second shock absorption member (300) extends through the second mounting hole (1102), wherein
a peripheral edge of the second mounting hole (1102) is embedded in the second connecting groove (322) to reduce vibration in the axial direction and the radial direction of the second buffer seat (320);
at least a portion of the second buffer seat (320) in the axial direction is configured to abut against a vehicle body to reduce vibration in the axial direction of the second buffer seat (320).

35. The shock absorption bracket (100) according to claim 34, wherein the second mounting hole (1102) is arranged at a first end of the main bracket portion (110), and the auxiliary bracket portion (120) is arranged at a second end of the main bracket portion (110).

36. The shock absorption bracket (100) according to claim 30, wherein the auxiliary bracket portion (120) is arranged with a fourth mounting hole (1201), and the second shock absorption member (300) extends through the fourth mounting hole (1201), wherein
a peripheral edge of the fourth mounting hole (1201) is embedded in the second connecting groove (322) to reduce vibration in the axial direction and the radial direction of the second buffer seat (320);
at least a portion of the second buffer seat (320) in the axial direction is configured to abut against a vehicle body to reduce vibration in the axial direction of the second buffer seat (320).

37. The shock absorption bracket (100) according to claim 30, wherein a dryer mounting seat (113) is arranged at the first end of the main bracket portion (110).

38. An air compressor assembly, comprising an air compressor (400) and the shock absorption bracket (100) according to any one of claims 28 to 37.

39. An air compressor assembly, comprising an air compressor (400) and the shock absorption bracket (100) according to any one of claims 13 to 27, wherein the air compressor (400) is mounted to the shock absorption bracket (100) through a first shock absorption member (200).

40. A vehicle (500), comprising the air compressor assembly according to claim 38 or 39.
